# EUROPEAN PATENT APPLICATION

(11) **EP 1 761 037 A1**
(43) Date of publication of application: **07.03.2007**
(21) Application number: 05300713.4
(22) Date of filing: 02.09.2005
(51) Int. Cl.: H04N 1/60

(54) **Colour chart and method for obtaining colour calibration values**

(71) Applicant: Thomson Licensing, 92100 Boulogne-Billancourt (FR)
(72) Inventor: Blonde, Laurent, 35235 Thorigne-Fouillard (FR); Stauder, Jürgen, 35440 Montreuil/Ille (FR); Thollot, Julien, 69420 Treves (FR); Sarayeddine, Khaled, 35410 Nouvoitou (FR)
(74) Representative: Ruellan-Lemonnier, Brigitte

(57) **Abstract**

A colour chart (200) on which a plurality of colour patches (202) are arranged. The colour patches essentially cover the width of the colour chart. The part of the colour chart not covered by colour patches is black. The colour chart of the invention is used to obtain colour calibration values by measuring a colour patch at several horizontally distant places and averaging the results. The colour chart and the method enables measurements that are quicker than using monochrome colour charts, while at least partly overcoming the horizontal problem, i.e. that measurements of a prior art colour patch returned a different value depending on the horizontal position of the colour patch.

## Description

### FIELD OF THE INVENTION

The invention relates generally to colour management, and more particularly to calibrations of displays.

### BACKGROUND OF THE INVENTION

In the digital film colour processing domain the reference is film projection. This is for historical reasons as well as the fact that film processing often has as output the film media for duplication and theatrical release. However during the digital process, working with scanned copies of the film, colour is often adjusted (colour grading) with the operator watching digital monitors or digital projectors. These systems need to be corrected from the colour point of view, in order to render the colours as close as possible as what they will look after being transferred on film and projected. To this end, a Colour Box is used on the signal feeding the digital monitor or projector, adjusting the colour codes in a controlled manner.

This Colour Box requires a calibration module in the form of a 3D-LUT (Look-Up Table) that transforms input colour code to output colour codes. The transform of the 3D-LUT is determined in two steps starting from the digital codes. On a first chain, the "reference" film chain, colour charts comprising one or more colour patches are recorded on a negative film. The film is then developed and transferred to positive, which positive is projected and colours thereon are measured. A colour measure (in XYZ colour space) is obtained for each colour patch colour code. Similar measurements, possibly with a different colour set, are performed on the "target" chain, for example the Digital Monitor chain, with the same colour charts as input, but in digital form. The measured values for each patch are combined to form a correspondence table that can be used to determine the input value needed to create a particular colour on the digital display.

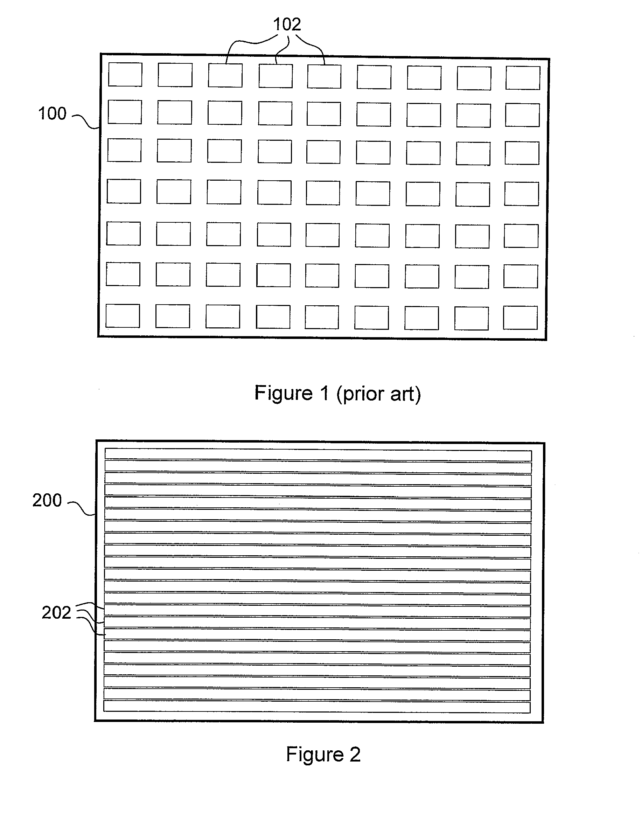

In the prior art, two kinds of colour charts are used. A first kind of chart comprises a single monochrome patch, while a second kind comprises a rectangular matrix of patches. Figure 1 illustrates an exemplary colour chart 100 of the second kind, displaying 63 colour patches 102 arranged in a 7×9 matrix. It should be noted that the use of these two kinds of colour charts is often complementary.

The use of monochrome colour charts naturally requires much time. Furthermore, experience has taught that the use of colour charts with colour patches in matrices causes a horizontal modulation problem: when a given colour is measured, the measured value of a patch differs depending on its horizontal position.

The present invention proposes a solution that is quicker than using monochrome colour charts, while it at the same time at least partly overcomes the horizontal modulation problem.

### SUMMARY OF THE INVENTION

In a first aspect, the invention is directed to a colour chart that comprises a plurality of colour patches. The colour patches are rectangular bands that essentially cover the width of the colour chart.

In a preferred embodiment, essentially the whole part of the colour chart not covered by colour patches has a uniform background colour.

In a further preferred embodiment, the colour patches are separated from each other.

In yet a further preferred embodiment, the colour chart is recorded on film adapted for projection.

In yet a further preferred embodiment, the colour chart is adapted for use when obtaining colour calibration values.

In a second aspect, the invention is directed to a method of obtaining colour calibration values. Using a imaging colorimeter, at least one colour patch that essentially covers the width of a colour chart is measured in a plurality of horizontally distant places to obtain measurement values. The plurality of measurement values are then averaged to obtain a colour calibration value.

### BRIEF DESCRIPTION OF THE DRAWINGS

Preferred features of the present invention will now be described, by way of example, with reference to the accompanying drawings, in which:
Figure 1, discussed hereinbefore, illustrates an exemplary, prior art, colour chart with multiple colour patches;
Figure 2 illustrates a colour chart according to the invention;
Figure 3 illustrates a method for generating a set of colour charts according to the invention; and
Figure 4 illustrates a method for obtaining colour calibration values according to the invention.

### DETAILED DESCRIPTION OF PREFERRED EMBODIMENTS

Figure 2 illustrates a colour chart according to the invention. The colour chart 200 comprises a plurality of rectangular, horizontally oriented, colour patches 202. In a preferred embodiment, the colour chart 200 is 2048 pixels wide and 1566 pixels high, and comprises 20 colour patches 202, each 1356 pixels wide and 64 pixels high, and the colour patches 202 are interspaced by 4 pixels of background colour, which is black (R=G=B=0).

For each colour patch 202, measurements are performed at a plurality of points and an average is calculated to obtain an estimate of the colour value.

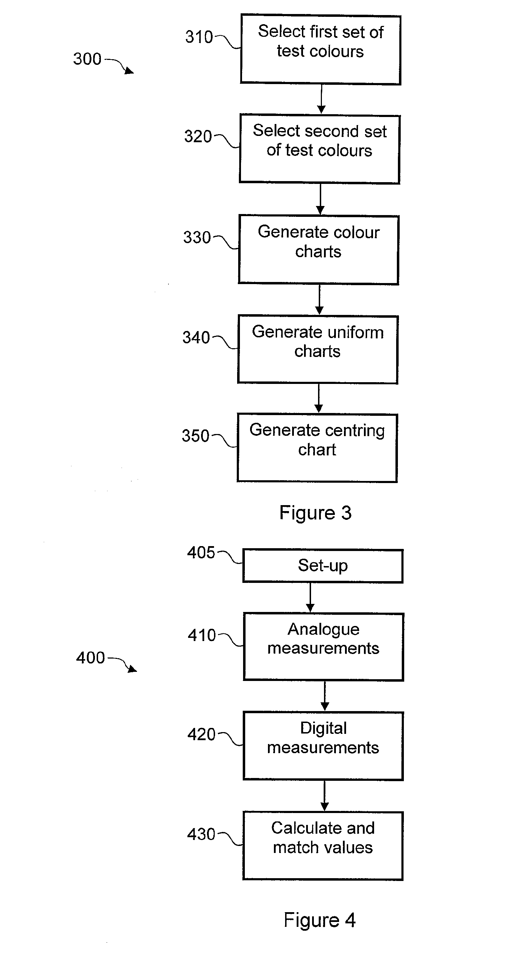

Figure 3 illustrates a method 300 for generating a set of colour charts for use in characterisation. In the exemplary preferred embodiment, the colours are sampled from a RGB colour cube.

In step 310, a first set of colours are selected. The set comprises:
- a base 6×6×6 sampling of an RGB colour cube;
- a 12×5 oversampling of the cube edges for a good definition of the gamut,
- a 6x25 oversampling of the cube faces, for a good definition of the gamut, and
- 5×5×5 samples at the centre of the base sampling 6x6x6 cube for verification purposes. Verification is a step at the end of the characterisation where the 5x5x5 sampling XYZ values are on one side computed by the model and on the other side taken from the measurement set. An averaged difference is computed to determine the quality of the characterisation in order to verify it.

The first set thus comprises 551 colours.

In step 320, a second set of colours are selected, providing a fine sample of the cube edges and diagonals. The second set comprises:
- 63 colours with R=G=B=n*16, n=1..63, and one with R=G=B=1023
- 63 colours with R=G=0,B=n*16, n=1..63, and one with R=G=0,B=1023
- 63 colours with R=B=0,G=n*16, n=1..63, and one with R=B=0,G=1023
- 63 colours with B=G=0,R=n*16, n=1..63, and one with B=G=0,R=1023
- 63 colours with G=0,R=B=n*16, n=1..63, and one with G=0,R=B=1023
- 63 colours with R=0,G=B=n*16, n=1..63, and one with G=0,R=B=1023
- 63 colours with B=0,R=G=n*16, n=1..63, and one with G=0,R=B=1023

The second set thus comprises 448 colours.

In step 330, colour charts are generated. In a preferred embodiment, the first and the second set of colours are generated on different sets of charts. With 20 rectangular patches on each chart, the first set of colour charts comprises 28 colour charts and the second set of colour charts comprises 23 colour charts. The charts are preferably generated so as to avoid high luminance gaps between colour patches.

To be recorded on film, each colour chart is generated as a 2048×1556 DPX (Digital Picture Exchange) image, each chart preferably distinctively named in the upper left-hand corner in a dark grey colour, such as R=G=B=256.

In step 340, 9 uniform colour charts are generated, each colour chart comprising a centred 1356×1356 pixel square of code values R = G = B = 0, 128, 256, 384, 512, 640, 768, 896, and 1023, respectively. These colour charts are used for determining the parasitic light and the spatial attenuation of a projector.

Finally, in step 350, a centring chart is generated. The centring chart has a black (R=G=B=0) background on which a horizontal and a vertical mid-grey (R=G=B=256) double line that cross in the middle of the chart, four red lines delimiting a centred 1356x1356 square, and within the red square, two vertical green lines at 516 and 516+1016=1532 pixels, respectively, from the left border. The centring chart is used when deciding where to project and where to measure the colour charts.

Figure 4 illustrates a method 400 for obtaining colour calibration values. In step 405, the test system is set up, by loading film in the film projector, starting the digital projector, starting the imaging colorimeter, using the centring chart to define the display area, and so on.

In step 410, analogue measurements are performed. The colour charts 200 according to the invention, as described hereinbefore, are displayed. Each colour chart 200 is preferably displayed a sufficiently long time to allow measurements of all the colour patches 202 thereon. The colour of each colour patch 202 is measured with an imaging colorimeter, by measuring in several, horizontally distant places - points or preferably small areas - in the colour patch and averaging the results. However, the measurements of the uniform colour charts are not averaged, rather, the measurements are stored as is for the time being. The colours are preferably measured in the XYZ colour space.

In step 430, digital measurements, quite similar to the analogue (film) measurements, are performed.

In step 440, measurements may be corrected based on the values of the measurements on the uniform colour patches, these measurements being indicative of parasitic light and the spatial attenuation of a projector. The measurements are then matched so that each RGB value, or similar, corresponds to a XYZ value.

It can thus be appreciated that the present invention improves upon the prior art in that the improved colour chart allows for quick measurements with lowered horizontal modulation.

It will be understood that the present invention has been described purely by way of example, and modifications of detail can be made without departing from the scope of the invention.

Each feature disclosed in the description and (where appropriate) the claims and drawings may be provided independently or in any appropriate combination. Features may, where appropriate be implemented in hardware, software, or a combination of the two.

Reference numerals appearing in the claims are by way of illustration only and shall have no limiting effect on the scope of the claims.

## Claims

1. A colour chart (200) comprising a plurality of colour patches (202), **characterised in that** the colour patches (202) are rectangular bands that essentially cover the width of the colour chart.

2. The colour chart (200) as claimed in claim 1, wherein essentially the whole part of the colour chart (200) not covered by colour patches (202) has a uniform background colour.

3. The colour chart (200) as claimed in claim 1 or 2, wherein the colour patches (202) are separated from each other.

4. The colour chart (200) as claimed in any preceding claim, wherein the colour chart is recorded on film adapted for projection.

5. The colour chart (200) as claimed in any preceding claim, wherein the colour chart is adapted for use when obtaining colour calibration values.

6. A method (400) of obtaining colour calibration values, comprising the steps of:
measuring (410) at least one colour patch (202) that essentially covers the width of a colour chart (200) in a plurality of horizontally distant places to obtain measurement values, using a imaging colorimeter; and
averaging the plurality of measurement values to obtain a colour calibration value.
